(19) **Europäisches Patentamt**
**European Patent Office**
**Office européen des brevets**

(11) **EP 3 335 866 B1**

(12) **EUROPEAN PATENT SPECIFICATION**

(45) Date of publication and mention
of the grant of the patent:
**20.11.2019 Bulletin 2019/47**

(51) Int Cl.:
***B29D 30/06*** *(2006.01)* ***B60C 9/17*** *(2006.01)*
***B60C 3/06*** *(2006.01)*

(21) Application number: **17207400.7**

(22) Date of filing: **14.12.2017**

(54) **METHOD OF MANUFACTURING A PNEUMATIC TIRE**

VERFAHREN ZUR HERSTELLUNG EINES PNEUMATISCHEN REIFENS

PROCÉDÉ DE FABRICATION D'UN PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2016 US 201662435874 P**

(43) Date of publication of application:
**20.06.2018 Bulletin 2018/25**

(73) Proprietor: **The Goodyear Tire & Rubber Company Akron, OH 44316 (US)**

(72) Inventors:
 • **JOUBERT, Paul Benoit**
  **2714 Luxembourg (LU)**
 • **BOURSIN, Jerome**
  **9173 Michelbouch (LU)**
 • **ZIMMER, François**
  **54720 Lexy (FR)**

 • **AHRENS, Bodo**
  **54295 Trier (DE)**
 • **THOMAS, Jean-Louis**
  **6700 Waltzing (BE)**
 • **MZABI, Samy**
  **9048 Ettelbruck (LU)**
 • **DEERENBERG, Edwin**
  **9047 Ettelbruck (LU)**

(74) Representative: **Kutsch, Bernd**
  **Goodyear S.A.**
  **Patent Department**
  **Avenue Gordon Smith**
  **7750 Colmar-Berg (LU)**

(56) References cited:
**EP-A1- 1 671 814 EP-A1- 2 248 681**
**WO-A1-99/58349 WO-A1-2014/167456**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to an improved tire, preferably a radial ply tire, and, more specifically, to an improved ply line of a radial ply passenger or truck tire and its method of manufacturing.

Background of the Invention

It is desirable for a tire tread to bear against the ground uniformly along its width, so that the load on the tire is evenly distributed. When a tire is loaded, the portion of the tire's sidewalls near the ground bulge outward. If the tire is stiff along the shoulders, the sidewall bulge causes the center of the tread in contact with the ground to lift off the ground or merely to lose pressure against the ground. The stiff tire sidewall close to the shoulder acts like a lever, and the shoulder against the ground acts as its fulcrum. This "tread-lift" is aggravated by high bending stiffness of the shoulder area, and by a small ply line radius (e.g., sharp bend) in the shoulder.

The resulting bending stresses from the sidewalls to the tread cause inward buckling and lifting of the center portion of the tread off the ground, causing the center portion of the tread to bear little or none of the tire's load, which produces several issues. It degrades vehicle handling characteristics, especially in cornering. It increases tread wear near the shoulders and increases material fatigue under the tread due to the cycling of the bending stresses upon tire rotation, and hence shortens tire life or durability. Tread-lift is a problem whether the tread center actually lifts off the ground or merely loses pressure against the ground.

"Heavy handling" refers to severe driving conditions due to aggressive driving by a driver, such as sharp cornering and/or racing conditions. For good heavy handling performance, the tire shoulder area needs to have heavier gauge (e.g., thicker) rubber in both the tire shoulder and upper sidewall areas. This is required to provide a high tangential stiffness (e.g., resistance of tread rotation around tire axis relative to the beads) and a better durability in heavy handling. However, a heavy gauge leads to high bending stiffness especially in the shoulder area where the ply line radius is rather small. Hence, heavy handling tires are prone to tread-lift.

The tread-lift issue has been conventionally mitigated by "decoupling grooves" in the tread in the tire shoulder areas, by increasing the radii of the adjacent contour-defining curves near the shoulder area, and by rendering the adjacent contour-defining curves non-tangential with each other at their meeting point. While alleviating the tread-lift issue, incorporating decoupling grooves in the shoulder areas reduces tangential stiffness and reduces tire in heavy handling tires.

EP-A-2 248 681 describes a studless tire having an asymmetric cavity shape and an asymmetric shoulder shape.

A further asymmetric tire is described in EP-A-1 671 814 and WO-A-99/58349.

WO-A-2014/167 456 describes a process and a vulcanizing mold for manufacturing a tire while a movement is imposed to the tread band during the vulcanization process along a direction parallel to the rotation axis of the tire in a manner so as to obtain a molded and vulcanized tire having an asymmetric profile in radial section.

Summary of the Invention

The invention relates to a method in accordance with claim 1.

A tire manufactured in accordance with the present invention has an axis of rotation, a cavity shape, a crown portion, a pair of beads, a tread, a pair of sidewalls, a pair of shoulder portions, and a carcass including a plurality of plies. Each ply has a cord. The tire is characterized by a path of the cord in at least one ply defining a ply line.

According to another aspect of the tire, the beads are both at the same radial position related to the axis of rotation with the pair of sidewalls being asymmetric.

According to still another aspect of the tire, the pair of shoulder portions have an asymmetric construction and the cavity shape has a symmetric construction.

According to yet another aspect of the tire, the tire is cured from quasi-symmetric uncured tire in an asymmetric mold with a symmetric mold ring and sidewall plates having different shapes.

According to still another aspect of the tire, the crown portion moves laterally when the tire is mounted on a symmetric rim and inflated.

According to yet another aspect of the tire, the ply line is asymmetric and one shoulder portion may have a radial position different from a radial position of the other shoulder portion.

A system manufactured in accordance with the present invention includes a substantially symmetric green tire having an axis of rotation, an asymmetric curing mold, curing the substantially symmetric tire with the asymmetric mold to produce a cured tire such that a crown area of the cured tire moves laterally when the cured tire is mounted on a symmetrical rim and is inflated.

According to another aspect of the system, an axial centerline of the crown area is axially offset a predetermined distance from an axial centerline of a rim on which the cured tire is mounted.

According to still another aspect of the system, the predetermined distance increases when the cured tire changes from an unloaded condition to a loaded condition.

According to yet another aspect of the system, the cured tire is free of grooves in shoulder areas of the crown area.

According to the invention, a method of manufacturing a pneumatic tire is disclosed, the method comprising: preparing a symmetric uncured tire having an axis of rotation, a cavity shape, a crown portion, a pair of beads, a tread, a pair of sidewalls, a pair of shoulder portions, and a carcass including one or a plurality of plies, each ply having a cord, and a path of the cords in at least one ply defining a ply line; and curing the uncured tire in an asymmetric mold, the asymmetric mold having a symmetric mold ring but asymmetric sidewall plates having different shapes such that the pair of shoulder portions have an asymmetric construction and the cavity shape of the tire is symmetric.

Brief Description of the Drawings

Reference will be made in detail to the example embodiments of the present invention, examples of which are illustrated in the accompanying drawings. The drawings are intended to be illustrative, not limiting. Certain elements in some of the drawings may be illustrated not-to-scale for illustrative clarity. The cross-sectional views presented herein may be in the form "near-sighted" cross-sectional views, omitting certain background lines that would otherwise be visible in a true cross-sectional view. The structure, operation, and advantages of the present invention will become further apparent upon consideration of the following description taken in conjunction with the accompanying drawings, wherein:

Fig. 1 shows a schematic cross-section of a system manufactured in accordance with the present invention;
Fig. 2 shows a schematic cross-section of another aspect of the system of Fig. 1;
Fig. 3 shows a schematic cross-section of still another aspect of the system of Fig. 1; and
Fig. 4 shows a schematic cross-section of yet another aspect of the system of Fig. 1 shows a schematic cross-section of a portion of the tire of Fig. 1.

Definitions

"Axial" and "axially" means the directions that are parallel to the tire axis.
"Bead" means an annular tensile member that is associated with holding the tire to the rim. The beads are wrapped by ply cords and shaped, with or without other reinforcement elements such as flippers, chippers, apexes or fillers, toe guards and chafers.
"Belt Structure" or "Belts" means one or at least two annular layers or plies of parallel cords, woven or unwoven, underlying the tread, unanchored to the bead, and preferably having both left and right cord angles in the range from 0° to 45° with respect to the equatorial plane of the tire.

"Carcass" means the tire structure apart from the belt structure, tread and underlay over the plies, but including the beads.
"Carcass cord" means a ply cord.
"Circumferential" means directions extending along the perimeter of the surface of the annular tread perpendicular to the axial direction.
"Cord" means one of the reinforcement strands which the plies in the tire comprise.
"Equatorial Plane" or "EP" means the plane perpendicular to the tire's axis of rotation and passing through the center of its tread.
"Lateral" means in the direction parallel with the tire axis.
"Loaded" used as an adjective for any parameter refers to that parameter for a tire that is loaded, (e.g., inflated, mounted on a passenger or small truck, and resting on a surface). The tread profile of a passenger or small truck tire is generally flat in the loaded condition.
"Meridional" refers to a tire profile cut along a plane that includes the tire's rotational axis.
"Ply" means a layer of rubber-coated parallel cords.
"Radial" means in a direction orthogonal to the tire axis.
"Radial Ply Tire" means a belted or circumferentially-restricted pneumatic passenger or small truck tire in which at least one ply has cords which extend from bead to bead and are laid at cord angles between 45° and 90° with respect to the equatorial plane of the tire. The term tire within the context of the present invention excludes motorcycle tires.
"Shoulder" means the region where the sidewall meets the tread edge.
"Shoulder Region" means the upper portion of sidewall just below the tread edge. The shoulder region of a passenger or small truck tire has a cavity radius of up to 60 millimeters (mm). The shoulder region is the part of the tire under this cavity radius and between two planes perpendicular to the ply and passing through the borders of this cavity radius.
"Sidewall" is the portion of a tire between the tread and the bead.
"Tire footprint" means the interface region in contact with the road surface while rotating under load. There is a vertical component acting in the "Z" direction, a longitudinal component acting in the "X" direction, and a lateral component acting in the "Y" direction.
"Unloaded" used as an adjective for any parameter refers to that parameter for a tire that is unloaded, (e.g., inflated and not resting on a surface). The tread profile of a passenger or small truck tire is generally flat in the unloaded condition.

Detailed Description of Example Embodiments of the Present Invention

A conventional tire is described in US-B-6,941,991 for instance.

The manufacturing of a tire in accordance with the present invention begins the manufacturing of green tire having a symmetrical green carcass or an at least substantially symmetrical green carcass. Afterwards, and in one aspect of the invention, this green tire is then cured in an asymmetrical mold thereby forming geometrically asymmetric sidewalls of the cured tire. This cured tire may then be inflated to produce an asymmetrical behavior of the cured tire while rotating and loaded. Such behavior generates an unbalance in carcass ply tension producing a beneficial asymmetrical force distribution within the tire footprint.

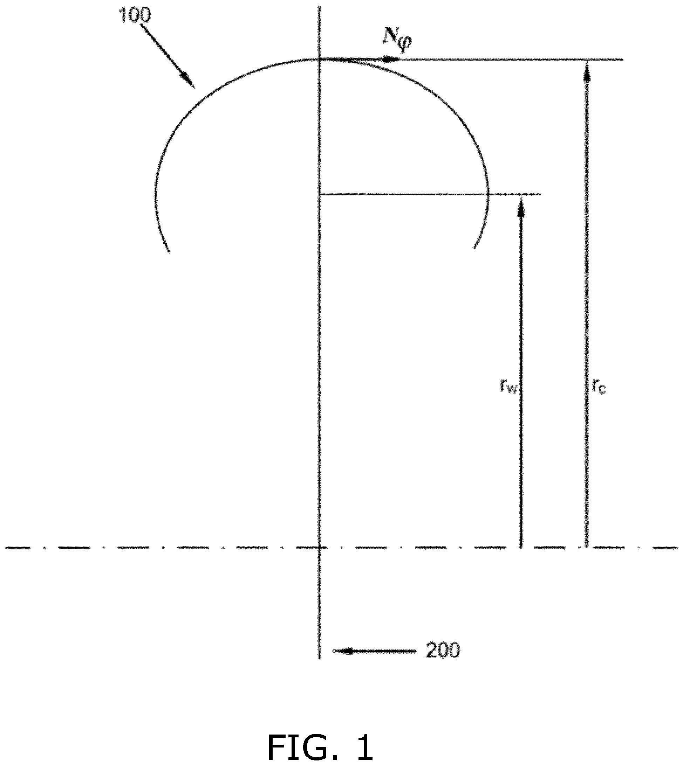

As seen in Fig. 1, the tension in the membrane, or carcass ply 100, is related to the air pressure (P) within the membrane by the below equation. The meridional tension $N\varphi$ may be expressed at the center line 200 of the tire as follows, with $r_c$ and $r_w$ being the axial distance from the center line 200, i.e. the equatorial plane of the tire, to the axially outermost point of the carcass ply in the cured tire sidewall in the uninflated state ($r_c$: cured maximum width radius at P = 0) and at the air pressure P respectively ($r_w$: cured maximum width radius at pressure P):

$$N\varphi = \frac{P\left(r_c^2 - r_w^2\right)}{2r_c}$$

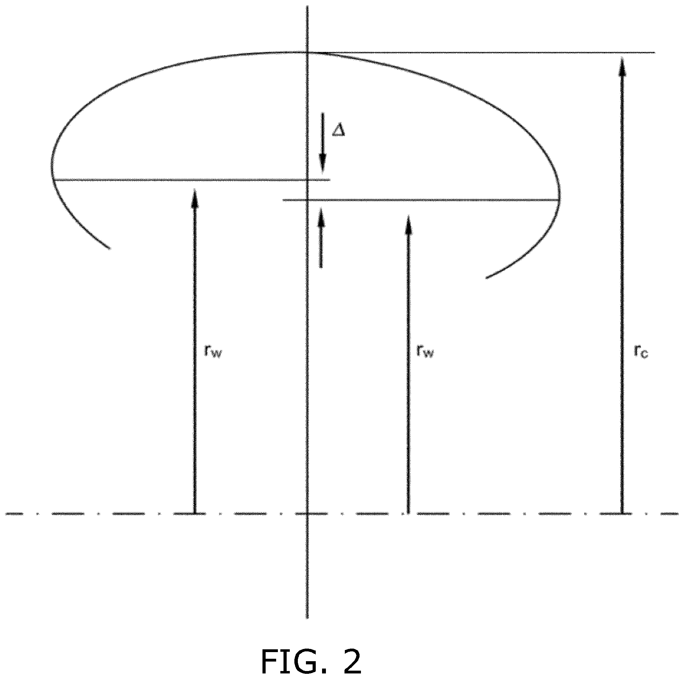

In order for a full belt package of the tire to move laterally, the full belt package has a cured maximum width radius $r_w$ radially different by the distance between the two sidewalls (see Fig. 2). This means that the cured maximum width radius $r_{w1}$ at one side of the tire or carcass play 100 is located radially at a different height (as measured from the line conntecting the radially innermost points of the tire in the tire bead area) than the cured maximum width radius $r_{w2}$ at the other side of the tire or carcass play 100, the radial difference being indicated in Fig. 2 as $\Delta$.

A radial inequality of tension during the inflation process moves the full belt package and crown area of the tire laterally. This difference $\Delta$ between the two radii $r_{w1}$, $r_{w2}$, may be obtained by curing the tire in an asymmetric mold.

Asymmetry can be lying in different levels between the two sidewalls and/or different curvatures between the two sidewalls.

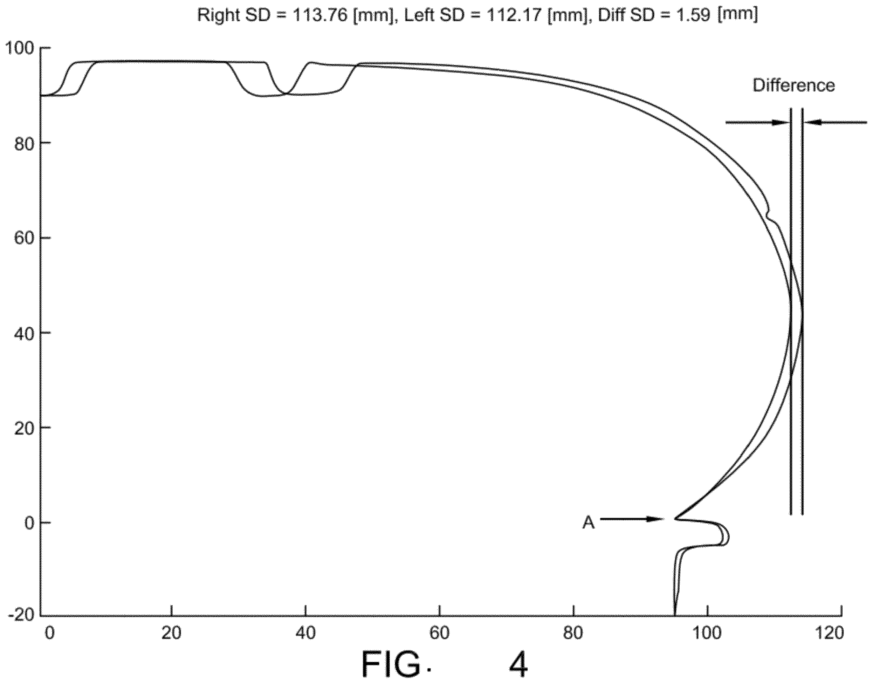

The lateral change in position can be measured by comparing the contour of the tire mounted on a symmetric rim at different inflation pressures (e.g., $P_i = 0$ bar), see Fig. 4.

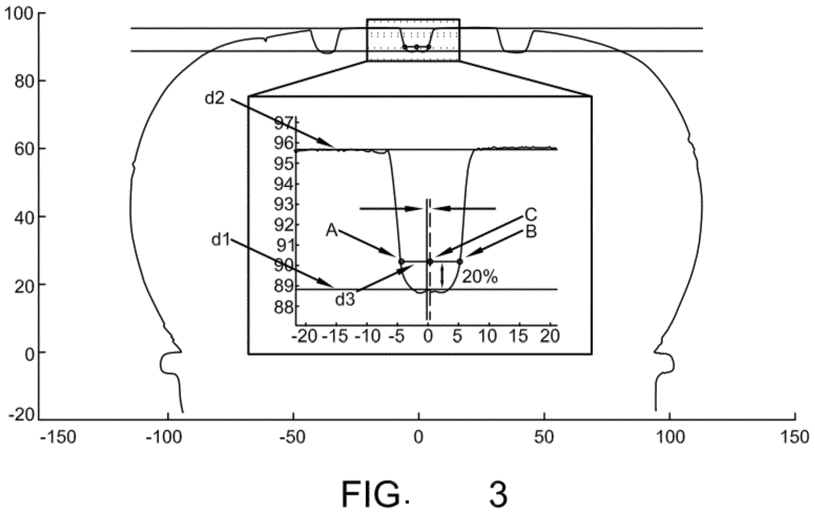

In FIG. 3, a measurement of the lateral displacement of the tire is shown. The reference point C is laterally located/moving during different steps of the inflating process. In the example shown in Fig. 3, the reference point C is initially, at zero inflation pressure, located axially where the equatorial plane of the tire crosses the tire tread (in Fig. 3: at a groove bottom).

The line d1 is a horizontal line intersecting the radially innermost position of the tread (or the radially innermost position of a tread groove bottom) at the center line 200.

The line d2 is a horizontal line intersecting the radially outermost position of the tread (or the two radially outermost edges of the tread groove) proximate the center line 200.

The line d3 is a horizontal line positioned at 20% of the radial distance between line d1 and line d2 close to d1.

The reference point A is the intersection of the line d3 and one sidewall of the center groove.

The reference point B is the intersection of the line d3 and the axial center of the center groove.

In the example shown in Fig. 3, the reference point C is also the midpoint between reference points A and B.

The axial position of reference point C, as shown in FIG. 4, is monitored for each inflation pressure step. The lateral change of position of one of the sidewalls is determined. Also, the maximum width of the sidewalls during the inflation pressure process is measured. The overall lateral change of position of the crown area may thereby be observed.

## Claims

1. A method of manufacturing a pneumatic tire, the method comprising:

preparing a symmetric uncured tire having an axis of rotation, a cavity shape, a crown portion, a pair of beads, a tread, a pair of sidewalls, a pair of shoulder portions, and a carcass including one or a plurality of plies, each ply having a cord, and a path of the cords in at least one ply defining a ply line;
curing the uncured tire in an asymmetric mold, the asymmetric mold having a symmetric mold ring but asymmetric sidewall plates having different shapes such that the pair of shoulder portions of the tire have an asymmetric construction and the cavity shape of the tire is symmetric.

## Patentansprüche

1. Verfahren zum Fertigen eines Luftreifens, wobei das Verfahren Folgendes umfasst:

Fertigen eines symmetrischen ungehärteten Reifens mit einer Drehachse, einer Hohlraumform, einem Laufflächenkronenabschnitt, einem Paar von Wülsten, einer Lauffläche, einem Paar von Seitenwänden, einem Paar von Schulterabschnitten und einer Karkasse einschließlich einer oder mehreren Lagen, wobei jede Lage einen Kord und einen Pfad der Korde in wenigstens einer Lage, die eine Lagenlinie definiert, aufweist;

Aushärten des ungehärteten Reifens in einem asymmetrischen Formkörper, wobei der asymmetrische Formkörper einen symmetrischen Formkörperring, aber asymmetrische Seitenwandplatten aufweist, die unterschiedliche Formen derart aufweisen, dass das Paar von Schulterabschnitten des Reifens eine asymmetrische Konstruktion aufweist und die Hohlraumform des Reifens symmetrisch ist.

## Revendications

1. Procédé de confection d'un bandage pneumatique, le procédé comprenant le fait de :

préparer un bandage symétrique non vulcanisé possédant un axe de rotation, une configuration en forme de cavité, une portion faisant office de sommet, une paire de talons, une bande de roulement, une paire de flancs, une paire de portions faisant office d'épaulements et une carcasse englobant une ou plusieurs nappes, chaque nappe possédant un câblé, et une trajectoire des câblés dans au moins une nappe définissant une ligne de pli ou de nappe ;

vulcaniser le bandage non vulcanisé dans un moule asymétrique, le moule asymétrique possédant un anneau de moulage symétrique, mais des plaques de parois latérales asymétriques possédant différentes configurations, d'une manière telle que la paire de portions faisant office d'épaulements du bandage possèdent une structure asymétrique et que la configuration en forme de cavité du bandage pneumatique est symétrique.

100

$N_\varphi$

$r_w$

$r_c$

200

FIG. 1

FIG. 2

FIG. 3

Right SD = 113.76 [mm], Left SD = 112.17 [mm], Diff SD = 1.59 [mm]

FIG. 4

EP 3 335 866 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2248681 A
- EP 1671814 A
- WO 9958349 A
- WO 2014167456 A
- US 6941991 B